# EUROPÄISCHE PATENTANMELDUNG

(11) **EP 3 885 604 A1**
(43) Veröffentlichungstag der Anmeldung: **29.09.2021**
(21) Anmeldenummer: 21159454.4
(22) Anmeldetag: 26.02.2021
(51) Int. Cl.: F16F 9/05

(54) **LUFTFEDERABROLLKOLBEN**

(30) Priorität: 18.03.2020 DE 102020001798
(71) Anmelder: MAN Truck & Bus SE, 80995 München (DE)
(72) Erfinder: Sabathil, Andreas, 80995 München (DE); Ogris, Marcel, 80995 München (DE)
(74) Vertreter: v. Bezold & Partner Patentanwälte - PartG mbB

(57) **Zusammenfassung**

Die Erfindung betrifft einen Abrollkolben (1) für einen Luftfederrollbalg einer Luftfeder, wobei der Abrollkolben (1) als Tauchkolben ausgebildet und mittels sich zumindest abschnittsweise radial erstreckender Versteifungselemente (2) ausgesteift ist. Mindestens eines der Versteifungselemente (2) weist mindestens einen Verzweigungspunkt (3) auf, an dem sich das Versteifungselement (2) in mindestens zwei Versteifungselementzweige (4, 5) verzweigt oder gabelt.

## Beschreibung

Die Erfindung betrifft einen Abrollbalg für einen Luftfederbalg einer Luftfeder. Die Erfindung betrifft ferner eine Luftfeder und ein Kraftfahrzeug mit einem derartigen Abrollbalg. Das Kraftfahrzeug kann ein Nutzfahrzeug, wie beispielsweise ein Omnibus oder ein Lastkraftwagen, sein.

Für einen erhöhten Fahrkomfort und zur Niveauregelung finden Luftfederungen in Kraftfahrzeugen zunehmend Anwendung. Bei Luftfederungen wird die Federfunktion durch einen pneumatisch geregelten Luftfederbalg realisiert, der auf einem Abrollkolben abrollt. Auf den Abrollkolben wirken in der Regel hohe statische und dynamische Lasten. Durch eine Kombination von hoher Beanspruchung und bauteilspezifischen Anforderungen ergeben sich Herausforderungen hinsichtlich der Auslegung und Herstellung dieser Komponente.

Aus dem Stand der Technik sind in diesem Zusammenhang eine Vielzahl unterschiedlich ausgestalteter Abrollkolben bekannt.

Einerseits existieren relativ schwere Abrollkolben aus Stahlblech mit voll nutzbarem Innenvolumen, andererseits existieren relativ leichte Abrollkolben aus Kunststoff mit nicht oder nur teilweise nutzbarem Innenvolumen. Bei nicht oder nur teilweise genutztem Innenvolumen weisen solche Konstruktionen Nachteile bezüglich des Federkomforts auf, da die Federung dann relativ hart ist.

Das Dokument DE 10 2007 035 640 A1 beschreibt einen Tauchkolben für eine Luftfeder, der als Hohlkörper ausgebildet ist und einen Boden aufweist, an dem ein umlaufendes Mantelteil mittelbar oder unmittelbar angekoppelt ist, und der an seinem, dem Boden abgewandten Deckelbereich einen Anschlussrand für einen Balg und wenigstens eine Luftdurchtrittsöffnung aufweist. Der Hohlkörper weist ein topfförmiges Unterteil auf, das den Boden und das Mantelteil bildet, wobei auf das Unterteil ein Oberteil aufgesetzt und mit dem Unterteil luftdicht verbunden ist. Das Unterteil und/oder das Oberteil sind mittels Versteifungselementen ausgesteift.

Das Dokument WO 2013/053536 A1 offenbart einen Abrollkolben aus Kunststoff für einen Luftfederrollbalg, wobei der Abrollkolben als Tauchkolben ausgebildet ist. Eine vorteilhafte Ausgestaltung besteht darin, dass der Innenraum des Abrollkolbens mit rippenartigen Versteifungselementen ausgesteift ist, die auch Querkräfte oder schräg einwirkende Pufferkräfte auffangen können. Auch lässt sich mit einer solchen Ausbildung die Wandstärke der rohrförmigen Stützenteile ggf. weiter reduzieren. Dieser Effekt wird noch dadurch erhöht, dass die rippenartigen Versteifungselemente sternförmig oder strahlenförmig angeordnet sind und dass rippenartige Versteifungselemente auch in den Ringräumen zwischen dem jeweiligen Stützenteil und Kolbenwandung oder Deckelwandung vorgesehen sind.

Die Aufgabe der vorliegenden Erfindung ist es, einen Abrollkolben bereitzustellen, mit dem Nachteile bekannter Abrollkolben vermieden werden können. Die Aufgabe der Erfindung ist es insbesondere, die aus der Praxis bekannten Tauchkolben hinsichtlich Beanspruchbarkeit zu verbessern.

Diese Aufgabe wird gelöst mit den Merkmalen des Anspruchs 1. Vorteilhafte Ausführungsformen und Anwendungen der Erfindung sind Gegenstand der abhängigen Ansprüche und werden in der folgenden Beschreibung unter teilweise Bezugnahme auf die Figuren näher erläutert.

Gemäß einem allgemeinen Gesichtspunkt der Erfindung wird ein Abrollkolben für einen Luftfederrollbalg einer Luftfeder bereitgestellt. Der Abrollkolben ist mittels sich zumindest abschnittsweise radial erstreckender Versteifungselemente ausgesteift. Der Abrollkolben ist vorzugsweise als Tauchkolben ausgebildet. Die Versteifungselemente können beispielsweise als Wandungen oder Rippen ausgebildet sein und vom Zentrum oder einem zentralen inneren Bereich des Abrollkobens zumindest abschnittsweise radial oder im Wesentlichen radial nach außen verlaufen. Unter der Radialrichtung wird eine Richtung verstanden, die senkrecht zur Abrollrichtung des Abrollkolbens ist.

Erfindungsgemäß weist mindestens eines der Versteifungselemente mindestens einen Verzweigungspunkt auf, an dem sich das Versteifungselement in mindestens zwei Versteifungselementzweige verzweigt oder gabelt. Mit anderen Worten teilt sich mindestens ein Versteifungselement an mindestens einem Verzweigungspunkt in mindestens zwei Versteifungselementzweige auf, die sich optional wiederum verzweigen können. Nochmals anders ausgedrückt weist der Abrollkolben eine sich in radialer Richtung erstreckende und sich dabei verzweigende oder astförmige Versteifungsstruktur auf. Die sich aus den Versteifungselementen, den Gabelungen oder Verzweigungen sowie den Versteifungselementzweigen ergebende Struktur kann z. B. bionischen, d. h. vorzugsweise in der belebten Natur vorkommenden, Strukturen entsprechen oder nachempfunden sein.

Der vorgeschlagene Abrollkolben bietet gegenüber den bekannten Lösungen Vorteile bezüglich einer besonders hohen Beanspruchbarkeit insbesondere in Zusammenhang mit der Herstellung des Abrollkolbens aus Kunststoff, da auf diese Weise kosteneffizient ein Bauteil mit geringem Gewicht, jedoch hoher Belastbarkeit ermöglicht wird. Zumindest ein Teil der auf den Abrollkolben wirkenden Axial- und Radiallast wird über die Versteifungselementzweige und Versteifungselemente aufgenommen und abgeleitet. Der vorgeschlagene Abrollkolben weist somit eine gegenüber bekannten Lösungen erhöhte Beanspruchbarkeit in radialer und/oder axialer Richtung auf. Ferner ergeben sich Vorteile bei der Herstellbarkeit wiederum in Zusammenhang mit der Herstellung des Abrollkolbens aus Kunststoff, da die sich verzweigende Versteifungsstruktur eine vorteilhafte Eignung zur Herstellung mit einem Spritzgussverfahren darstellt. Denn die Struktur aus Versteifungselementen, Gabelungen oder Verzweigungen und Versteifungselementzweigen kann während des Herstellprozesses auch als Leitkanal für das geschmolzene Gussmaterial dienen.

In einer vorteilhaften Ausführungsform können sich die Versteifungselemente von einem zentralen inneren Bereich des Abrollkolbens strahlenförmig nach außen erstrecken. Ferner können sich zumindest eine Mehrzahl der Versteifungselemente dabei mindestens einmal, optional mehrfach, verzweigen. Dadurch kann die Versteifungswirkung verbessert werden.

Vorstehend wurde bereits erwähnt, dass die sich aus der sich verzweigenden Versteifungsstruktur ergebende Struktur bionischen, d. h. vorzugsweise in der belebten Natur vorkommenden, Strukturen entspricht oder nachempfunden sein kann. In einer besonders vorteilhaften Ausführungsform können die Versteifungselemente eine Struktur bilden, die einer Struktur einer Blattunterseite der Seerose Victoria cruziana entspricht oder nachempfunden ist. Der Abrollkolben wird durch die Versteifungselemente auf diese Weise besonders effektiv ausgesteift, denn die belastete Oberfläche des Abrollkolbens wird durch die Struktur aus Versteifungselementen in mehrere kleine Einheiten, vorzugsweise jeweils ähnlicher Größe, unterteilt. Dies birgt weitere Vorteile in Bezug auf die Beanspruchbarkeit des Abrollkolbens.

Gemäß einer weiteren Ausführungsform kann zumindest ein Teil der Verzweigungspunkte unterschiedlicher Versteifungselemente in radialer Richtung zueinander versetzt angeordnet sein. Die versteifende Wirkung der Versteifungselemente erstreckt sich somit vorteilhafter Weise nicht nur auf eine einzige, sondern mehrere Radialpositionen des Abrollkolbens und kann an die Belastungsverhältnisse bedarfsgerecht angepasst werden.

Gemäß einer weiteren Ausführungsform kann ein Verzweigungs- oder Gabelungswinkel zwischen den Versteifungselementzweigen abnehmen, wenn sich die Versteifungselementzweige von dem Verzweigungspunkt weg erstrecken. Dies birgt den Vorteil, dass sich eine wesentlich größere Anzahl an Versteifungselementzweigen in dem Abrollkolben unterbringen lässt, was die Beanspruchbarkeit des Abrollkolbens weiter erhöht.

Gemäß einem weiteren zusätzlichen Aspekt der letztgenannten Ausführungsform kann mindestens einer der Versteifungselementzweige, vorzugsweise beide oder alle Versteifungselementzweige, eines Verzweigungspunkts eine Krümmung oder einen Knick aufweisen, um den Verzweigungs- oder Gabelungswinkel zwischen den Versteifungselementzweigen zu verkleinern, wenn sich die Versteifungselementzweige von dem Verzweigungspunkt weg erstrecken. So kann der Verzweigungs- oder Gabelungswinkel zwischen den Versteifungselementzweigen sich verkleinern, wenn sich die Versteifungselementzweige von dem Verzweigungspunkt weg erstrecken. Dies birgt den Vorteil einer glatten Kraftumlenkung bzw. Reduzierung der Kerbwirkung an den Verzweigungspunkten.

Gemäß einer weiteren Ausführungsform kann eine Wandstärke der Versteifungselemente variieren. Vorzugsweise kann die Wandstärke nach radial außen abnehmen. Dies birgt Vorteile hinsichtlich der Kosten und des Gewichts des Abrollkolbens.

Gemäß einer weiteren Ausführungsform können die Versteifungselemente einstückig an einen inneren Bereich des Abrollkolbens und einstückig an einen äußeren Bereich des Abrollkolbens angebunden sein. Der Abrollkolben ist somit besonders einfach herstellbar.

In einer weiteren Ausführungsform sind eines, vorzugsweise alle, sich zumindest abschnittsweise radial erstreckende Versteifungselemente durch eines oder mehrere sich in Umfangsrichtung erstreckende Versteifungselemente abgestützt. Die sich zumindest abschnittsweise radial erstreckenden Versteifungselemente können auch als erste Versteifungselemente bezeichnet werden zur besseren Unterscheidung von den mehreren sich in Umfangsrichtung erstreckenden Versteifungselementen, die auch als zweite Versteifungselemente bezeichnet werden können.

Gemäß einer weiteren Variante kann der Abrollkolben im Wesentlichen kreissegmentförmig verlaufende zweite Versteifungselemente aufweisen, die jeweils einstückig an zwei benachbarte, sich zumindest abschnittsweise radial erstreckende Versteifungselemente oder an zwei benachbarte Versteifungselementzweige (erste Versteifungselemente) angebunden sind. Vorteilhaft ergibt sich eine zusätzliche versteifende Wirkung zwischen benachbarten Versteifungselementen oder benachbarten Versteifungselementzweigen.

Gemäß einer weiteren Ausführungsformkann kann der Abrollkolben als Spritzgussteil ausgebildet sein, vorzugweise als Kunststoff-Spritzgussteil, weiter vorzugsweise hergestellt aus glasfaserverstärktem Kunststoff.

Gemäß einer alternativen Ausführungsform kann der Abrollkolben mittels eines 3D-Druckverfahrens, vorzugsweise Additive Layer Manufacturing, hergestellt sein.

Gemäß einer weiteren Ausführungsform, kann der Abrollkolben als Hohlkörper ausgebildet sein, wobei ein Innenraum des Abrollkolbens mittels der sich zumindest abschnittsweise radial erstreckenden Versteifungselemente ausgesteift ist. Der Innenraum des Abrollkolbens wird somit in vorteilhafter Weise als Federvolumen genutzt, wobei gleichzeitig eine hohe Belastbarkeit gewährt werden kann.

Der Abrollkolben kann ein Kolbenunterteil und ein Kolbenoberteil aufweisen. Hierbei kann das Kolbenunterteil die Versteifungselemente, wie vorstehend beschrieben, aufweisen. Alternativ oder zusätzlich kann das Kolbenoberteil die Versteifungselemente, wie vorstehend beschrieben, aufweisen.

Beispielsweise kann der Abrollkolben ein topfförmig, zylindrisch und/oder rohrförmig ausgebildetes Kolbenunterteil und ein mit dem Kolbenunterteil luftdicht verbundenes und als Deckel ausgebildetes Kolbenoberteil umfassen, wobei das Kolbenunterteil und/oder das Kolbenoberteil mittels der sich zumindest abschnittsweise radial erstreckender Versteifungselemente ausgesteift ist. Der konstruktive Aufbau und die Herstellbarkeit des Abrollkolbens werden dadurch weiter vereinfacht.

Gemäß einem weiteren Aspekt der letztgenannten Ausführungsform können sich die Versteifungselemente des Kolbenunterteils im Radialschnitt des Luftfederabrollkolbens über die gesamte Höhe des Innenraums des Kolbenunterteils erstrecken, und/oder das Kolbenoberteil kann einen Anschlussrand für einen Luftfederrollbalg aufweisen.

Die Erfindung betrifft ferner eine Luftfeder, umfassend einen Abrollkolben wie in diesem Dokument beschrieben.

Die Erfindung betrifft ferner ein Kraftfahrzeug, umfassend einen Abrollkolben oder eine Luftfeder wie in diesem Dokument beschrieben. Vorzugsweise handelt es sich bei dem Kraftfahrzeug um ein Nutzfahrzeug. Mit anderen Worten kann es sich bei dem Kraftfahrzeug um ein Kraftfahrzeug handeln, das durch seine Bauart und Einrichtung zur Beförderung von Personen, zum Transport von Gütern oder zum Ziehen von Anhängerfahrzeugen ausgelegt ist. Beispielsweise kann es sich bei dem Kraftfahrzeug um einen Lastkraftwagen, einen Omnibus und oder einen Sattelzug handeln.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1: einen Abrollkolben gemäß einer Ausführungsform in isometrischer Ansicht;
- Figur 2: den Abrollkolben gemäß der Ausführungsform aus Figur 1 in der Draufsicht;
- Figur 3: eine schematische Darstellung eines sich in zwei Versteifungselementzweige gabelnden Versteifungselements des Abrollkolbens der Ausführungsform aus Figur 1 in der Draufsicht;
- Figur 4: den Abrollkolben gemäß der Ausführungsform aus Figur 1 in der Seitenansicht;
- Figur 5: den Abrollkolben gemäß der Ausführungsform aus Figur 1 in der Unteransicht; und
- Figur 6: eine Seerosenstruktur (Blattunterseite einer Seerose Victoria cruziana).

Gleiche oder funktional äquivalente Elemente sind in allen Figuren mit denselben Bezugszeichen bezeichnet und sind zum Teil nicht gesondert beschrieben.

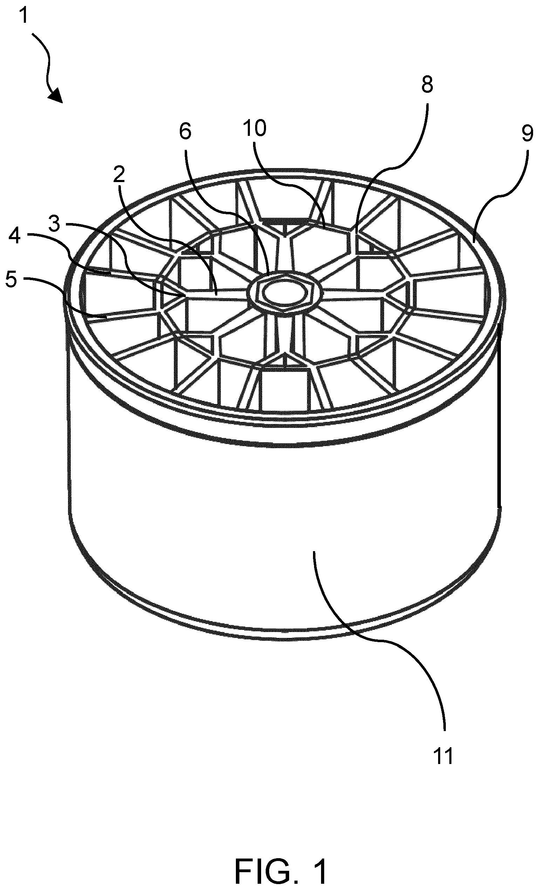

Figur 1 zeigt einen Abrollkolben 1 gemäß einer Ausführungsform in isometrischer Ansicht.

Der gezeigte Abrollkoben 1 ist als Tauchkolben für einen Luftfederrollbalg (nicht dargestellt) einer Luftfeder (nicht dargestellt) ausgebildet. In an sich bekannter Weise kann der Luftfederrollbalg über den Abrollkolben 1 gestülpt und mit dem Abrollkolben 1 luftdicht verbunden werden. Zur Niveauregelung oder während des Federvorgangs kann der Luftfederrollbalg in ebenfalls bekannter Weise auf dem Abrollkolben 1 abrollen. Der Abrollkolben 1 wird dadurch axial und radial belastet.

Der Abrollkolben 1 umfasst in dieser Ausführungsform ein topfförmig ausgebildetes Kolbenunterteil 11 und ein mit dem Kolbenunterteil 11 luftdicht verbundenes und als Deckel ausgebildetes Kolbenoberteil (nicht dargestellt). Der Abrollkolben 1 kann alternativ oder zusätzlich auch zylindrisch und/oder rohrförmig ausgebildet sein.

In der gezeigten Ausführungsform ist das Kolbenunterteil 11 des Abrollkolbens 1 als Hohlkörper ausgebildet und mit acht, sich zumindest abschnittsweise radial erstreckenden Versteifungselementen 2 ausgesteift. Es können jedoch auch weniger Versteifungselemente 2 oder zusätzliche Versteifungselemente 2 vorgesehen sein. Die Versteifungselemente 2 bilden Wandungen oder Rippen im Inneren des Kolbenunterteils 11 des Abrollkolbens 1 aus. Die Versteifungselemente 2 des Kolbenunterteils erstrecken sich im Radialschnitt des Abrollkolbens 1 über die gesamte Höhe des Innenraums des Kolbenunterteils.

Ferner kann das (nicht dargestellte) Kolbenoberteil alternativ oder zusätzlich ebenfalls mit sich zumindest abschnittsweise radial erstreckenden Versteifungselementen 2 ausgesteift sein und einen Anschlussrand für einen Luftfederrollbalg aufweisen.

Der Abrollkolben 1 ist im gezeigten Ausführungsbeispiel als Kunststoff-Spritzgussteil ausgebildet und aus glasfaserverstärktem Kunststoff hergestellt. In einer weiteren (nicht dargestellten) Ausführungsform kann der Abrollkolben 1 mittels eines 3D-Druckverfahrens, vorzugsweise Additive Layer Manufacturing, hergestellt sein.

Die Versteifungselemente 2 weisen jeweils einen Verzweigungspunkt 3 auf, an dem sich jedes Versteifungselement 2 in zwei Versteifungselementzweige 4, 5 verzweigt oder gabelt. Es kann jedoch auch nur ein Teil der Versteifungselemente 2 besagten Verzweigungspunkt 3 aufweisen. Ferner ist es möglich, dass sich die Verzweigungselemente 2 in mehr als zwei Versteifungselementzweige 4, 5 verzweigen oder gabeln.

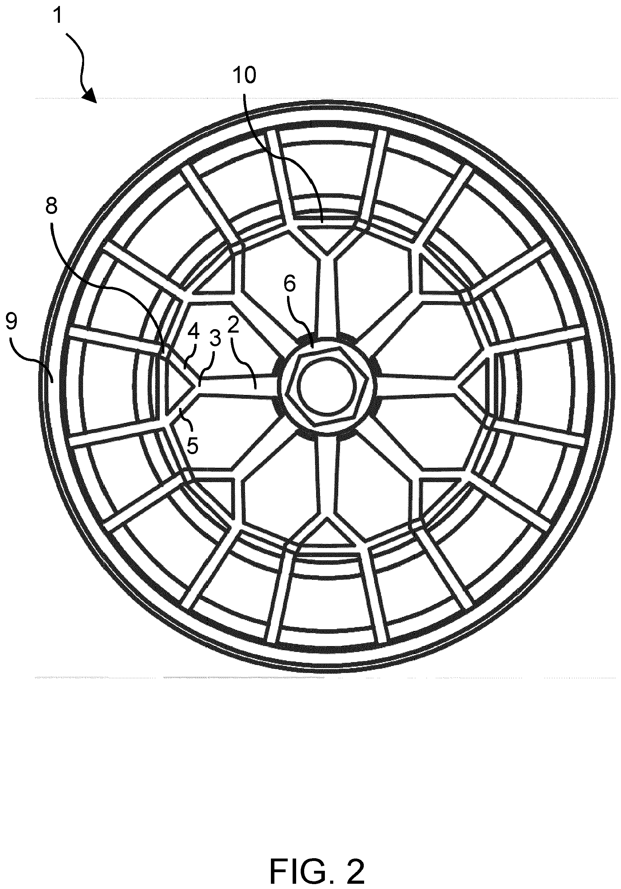

Figur 2 zeigt den Abrollkolben gemäß der zuvor beschriebenen Ausführungsform in der Draufsicht. Es ist ersichtlich, dass sich die Versteifungselemente 2 von einem zentralen inneren Bereich 6 des Abrollkolbens 1 strahlenförmig nach außen erstrecken und sich die Versteifungselemente 2 dabei einmal verzweigen. In weiteren (nicht dargestellten) Ausführungsformen ist eine größere oder kleinere Anzahl an Verzweigungselementen 2 und/oder Verzweigungspunkten 3 möglich.

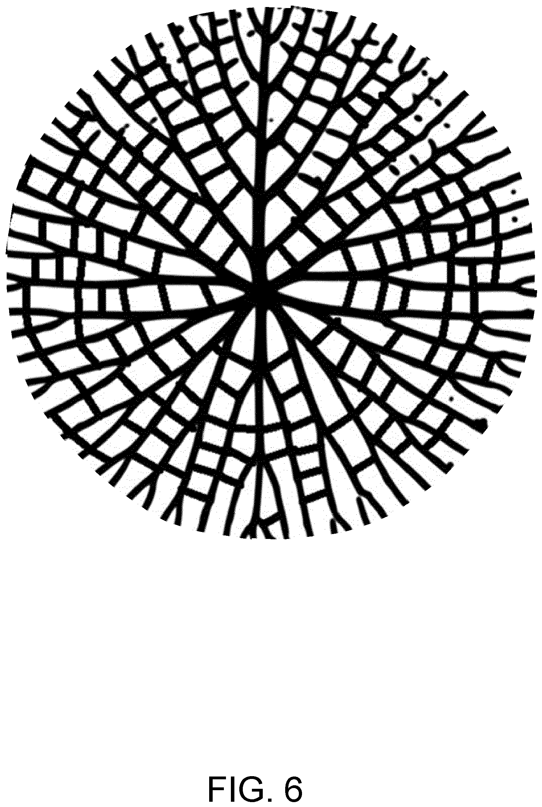

Ferner wird in Figur 2 deutlich, dass die Versteifungselemente 2 eine Struktur bilden, die einer, in Figur 6 beispielhaft dargestellten, Struktur einer Blattunterseite der Seerose Victoria cruziana entspricht oder nachempfunden ist. Die Versteifungselemente 2 sind einstückig an einen inneren Bereich 6 des Abrollkolbens 1 und einstückig an einen äußeren Bereich 9 des Abrollkolbens 1 angebunden. Der Abrollkolben 1 weist im Wesentlichen kreissegmentförmig verlaufende weitere Versteifungselemente 10 auf, die im Bereich der Krümmung oder dem Knick 8 der Versteifungselementzweige 4, 5 jeweils einstückig an zwei benachbarte sich zumindest abschnittsweise radial erstreckenden Versteifungselemente 2 oder an zwei benachbarte Versteifungselementzweige 4, 5 angebunden sind. Die kreissegmentförmig verlaufenden Versteifungselemente 10 verlaufen mit anderen Worten im Wesentlichen in Umfangs- oder Tangentialrichtung des topfförmigen Kolbenunterteils 11 des Abrollkolbens 1 und bilden zusammengenommen eine Kreisstruktur.

Im in Figur 2 gezeigten Ausführungsbeispiel sind die Verzweigungspunkte 3 an den Verzweigungselementen 2 jeweils auf gleicher radialer Höhe angeordnet, es ist gemäß weiteren (nicht dargestellten) Ausführungsformen jedoch auch möglich, dass zumindest ein Teil der Verzweigungspunkte 3 unterschiedlicher Versteifungselemente 2 in radialer Richtung zueinander versetzt angeordnet sind.

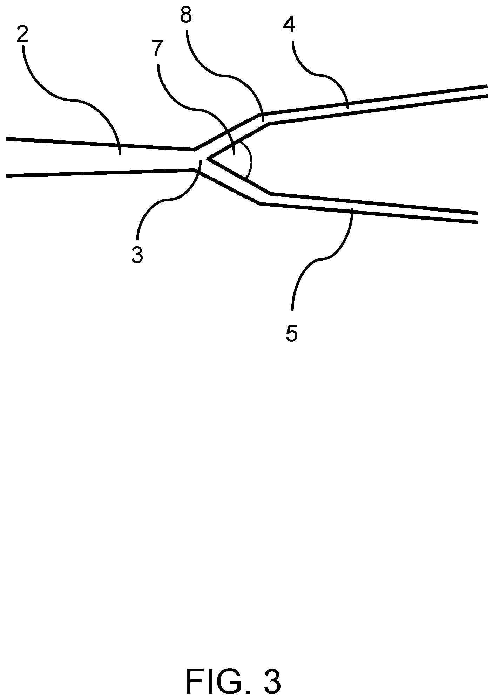

Figur 3 zeigt eine schematische Darstellung eines sich in zwei Versteifungselementzweige 4, 5 gabelnden Versteifungselements 2 des Abrollkolbens der zuvor beschriebenen Ausführungsform in der Draufsicht.

Zwei Versteifungselementzweige 4, schließen einen Verzweigungs- oder Gabelungswinkel 7 ein. Beide Versteifungselementzweige 4, 5 des Verzweigungspunkts 3 weisen einen Knick 8 auf, um den Verzweigungs- oder Gabelungswinkel 7 zwischen den Versteifungselementzweigen 4, 5 zu verkleinern, wenn sich die Versteifungselementzweige 4, 5 von dem Verzweigungspunkt 3 weg erstrecken. Ferner nimmt die Wandstärke der Versteifungselemente 2 nach radial außen, d. h. in der gezeigten Ansicht nach rechts, ab.

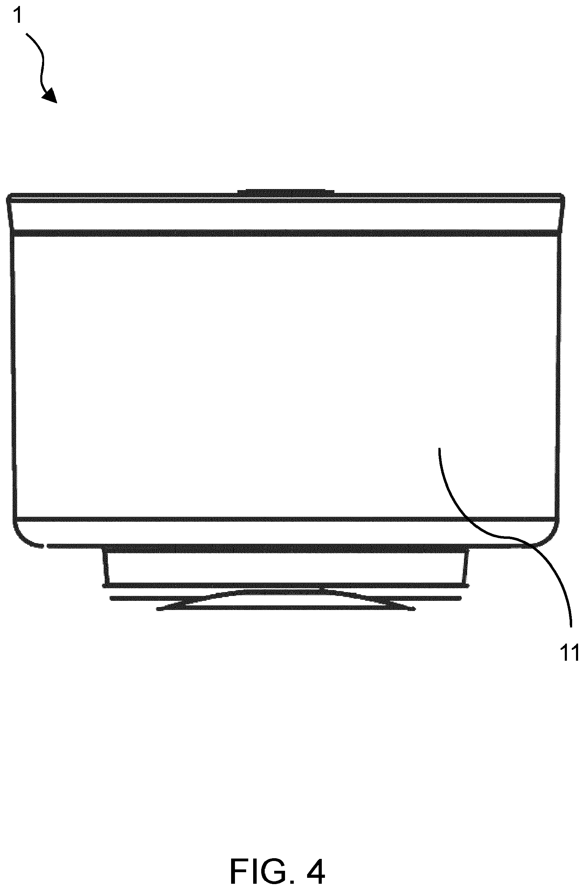

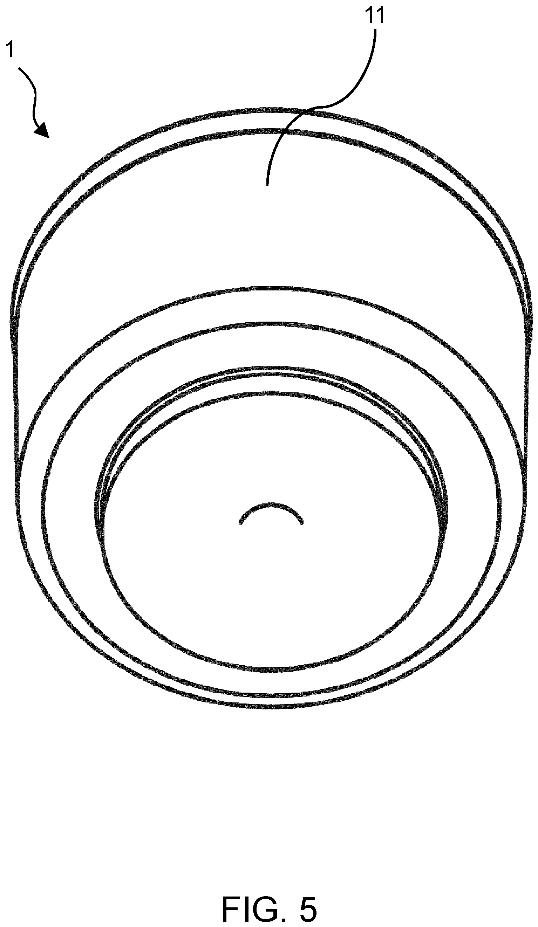

Die Figuren 4 und 5 zeigen den Abrollkolben gemäß der oben beschriebenen Ausführungsform ergänzend in der Seiten- bzw. Unteransicht.

Die Figur 6 zeigt beispielhaft eine Seerosenstruktur an der Blattunterseite einer Seerose Victoria cruziana.

Obwohl die Erfindung unter Bezugnahme auf bestimmte Ausführungsbeispiele beschrieben worden ist, ist es für den Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Abrollkolben
- 2: Versteifungselemente
- 3: Verzweigungspunkt
- 4: Versteifungselementzweig
- 5: Versteifungselementzweig
- 6: Zentraler innerer Bereich
- 7: Gabelungswinkel
- 8: Knick
- 9: Äußerer Bereich
- 10: Kreissegmentförmig verlaufendes Versteifungselement
- 11: Kolbenunterteil

## Patentansprüche

1. Abrollkolben (1) für einen Luftfederrollbalg einer Luftfeder, wobei der Abrollkolben (1) als Tauchkolben ausgebildet und mittels sich zumindest abschnittsweise radial erstreckender Versteifungselemente (2) ausgesteift ist,
**dadurch gekennzeichnet,**
**dass** mindestens eines der Versteifungselemente (2) mindestens einen Verzweigungspunkt (3) aufweist, an dem sich das Versteifungselement (2) in mindestens zwei Versteifungselementzweige (4, 5) verzweigt oder gabelt.

2. Abrollkolben (1) nach Anspruch 1,
a) wobei die Versteifungselemente (2) sich von einem zentralen inneren Bereich (6) des Abrollkolbens (1) strahlenförmig nach außen erstrecken und zumindest eine Mehrzahl der Versteifungselemente (2) sich dabei mindestens einmal, optional mehrfach, verzweigt; und/oder
b) wobei die Versteifungselemente (2) eine Struktur bilden, die einer Struktur einer Blattunterseite der Seerose Victoria cruziana entspricht oder nachempfunden ist.

3. Abrollkolben (1) nach Anspruch 1 oder 2, wobei zumindest ein Teil der Verzweigungspunkte (3) unterschiedlicher Versteifungselemente (2) in radialer Richtung zueinander versetzt angeordnet sind.

4. Abrollkolben (1) nach einem der vorhergehenden Ansprüche, wobei ein Verzweigungs- oder Gabelungswinkel (7) zwischen den Versteifungselementzweigen (4, 5) abnimmt, wenn sich die Versteifungselementzweige (4, 5) von dem Verzweigungspunkt (3) weg erstrecken.

5. Abrollkolben (1) nach Anspruch 4, wobei mindestens einer der Versteifungselementzweige (4, 5), vorzugsweise beide oder alle Versteifungselementzweige (4, 5), eines Verzweigungspunkts (3) eine Krümmung oder einen Knick (8) aufweisen, um den Verzweigungs- oder Gabelungswinkel (7) zwischen den Versteifungselementzweigen (4, 5) zu verkleinern, wenn sich die Versteifungselementzweige (4, 5) von dem Verzweigungspunkt (3) weg erstrecken.

6. Abrollkolben (1) nach einem der vorhergehenden Ansprüche, wobei eine Wandstärke der Versteifungselemente (2) variiert, wobei vorzugsweise die Wandstärke nach radial außen abnimmt.

7. Abrollkolben (1) nach einem der vorhergehenden Ansprüche, wobei die Versteifungselemente (2) einstückig an einen inneren Bereich (6) des Abrollkolbens (1) und einstückig an einen äußeren Bereich (9) des Abrollkolbens (1) angebunden sind.

8. Abrollkolben (1) nach einem der vorhergehenden Ansprüche, wobei mindestens eines, vorzugsweise alle, sich zumindest abschnittsweise radial erstreckende Versteifungselemente (2) durch eines oder mehrere sich in Umfangsrichtung erstreckende Versteifungselemente (10) abgestützt sind.

9. Abrollkolben (1) nach einem der vorhergehenden Ansprüche, wobei der Abrollkolben (1) im Wesentlichen kreissegmentförmig verlaufende Versteifungselemente (10) aufweist, die jeweils einstückig an zwei benachbarte, sich zumindest abschnittsweise radial erstreckende Versteifungselemente (2) oder an zwei benachbarte Versteifungselementzweige (4, 5) angebunden sind.

10. Abrollkolben (1) nach Anspruch 5 und 9, wobei zumindest eines der im Wesentlichen kreissegmentförmig verlaufenden Versteifungselemente (10) im Bereich der Krümmung oder dem Knick (8) der Versteifungselementzweige (4, 5) angebunden ist.

11. Abrollkolben (1) nach einem der vorhergehenden Ansprüche, wobei der Abrollkolben (1) als Spritzgussteil ausgebildet ist, vorzugweise als Kunststoff-Spritzgussteil, weiter vorzugsweise hergestellt aus glasfaserverstärktem Kunststoff.

12. Abrollkolben (1) nach einem der Ansprüche 1 bis 10, wobei der Abrollkolben (1) mittels eines 3D-Druckverfahrens, vorzugsweise einer Additive Layer Manufacturing-Technik, hergestellt ist.

13. Abrollkolben (1) nach einem der vorhergehenden Ansprüche, wobei der Abrollkolben (1) als Hohlkörper ausgebildet ist und wobei ein Innenraum des Abrollkolbens (1) mittels der sich zumindest abschnittsweise radial erstreckenden Versteifungselemente (2) ausgesteift ist.

14. Abrollkolben (1) nach einem der vorhergehenden Ansprüche, umfassend ein topfförmig, zylindrisch und/oder rohrförmig ausgebildetes Kolbenunterteil (11) und ein mit dem Kolbenunterteil (11) luftdicht verbundenes und als Deckel ausgebildetes Kolbenoberteil, wobei das Kolbenunterteil (11) und/oder das Kolbenoberteil mittels der sich zumindest abschnittsweise radial erstreckendenVersteifungselemente (2) ausgesteift ist.

15. Abrollkolben (1) nach Anspruch 14, wobei sich die Versteifungselemente (2) des Kolbenunterteils (11) im Radialschnitt des Abrollkolbens (1) über die gesamte Höhe des Innenraums des Kolbenunterteils (11) erstrecken und/oder das Kolbenoberteil einen Anschlussrand für einen Luftfederrollbalg aufweist.

16. Luftfeder, umfassend einen Abrollkolben (1) nach einem der vorhergehenden Ansprüche.

17. Kraftfahrzeug, vorzugsweise Nutzfahrzeug, wie beispielsweise ein Omnibus oder ein Lastkraftwagen, umfassend einen Abrollkolben (1) nach einem der vorhergehenden Ansprüche 1 bis 14 oder eine Luftfeder nach Anspruch 16.
